(19) Europäisches Patentamt
European Patent Office
Office européen des brevets

(11) Veröffentlichungsnummer: **0 542 060 A1**

# (12) EUROPÄISCHE PATENTANMELDUNG


(21) Anmeldenummer: **92118622.7**

(51) Int. Cl.⁵: **H02B 15/02**, G05B 19/08

(22) Anmeldetag: **30.10.92**

(30) Priorität: **14.11.91 DE 9114200 U**

(43) Veröffentlichungstag der Anmeldung:
**19.05.93 Patentblatt 93/20**

(84) Benannte Vertragsstaaten:
**DE FR GB IT**



(71) Anmelder: **SIEMENS AKTIENGESELLSCHAFT**
**Wittelsbacherplatz 2**
**W-8000 München 2(DE)**

(72) Erfinder: **Harmsen, Peter, Dipl.-Ing. (FH)**
**Ceciliastrasse 21**
**W-8472 Schwarzenfeld(DE)**
Erfinder: **Kaaden, Peter**
**Widemstrasse 8**
**W-8460 Schwandorf(DE)**
Erfinder: **Spindler, Konrad, Dipl.-Ing. (FH)**
**Dianastrasse 16**
**W-8450 Amberg/Gailoh(DE)**


## (54) Zeitrelais mit integrierter Signalverarbeitung.


(57) Die Erfindung bezieht sich auf ein Zeitrelais mit integrierter Signalverarbeitung zum Anschluß mehrerer Sensoren und Schaltmittel zur Verknüpfung der Eingänge zur Erzielung bestimmter Ausgangssignale. Die Schaltmittel sind hier nach Art eines Mosaikschaltbildes mit erkennbarem Verknüpfungsverlauf als Verknüpfungsschiene angeordnet. An die Verknüpfungsschiene sind sowohl eingangsseitig als auch ausgangsseitig weitere Zeitrelais anschließbar.


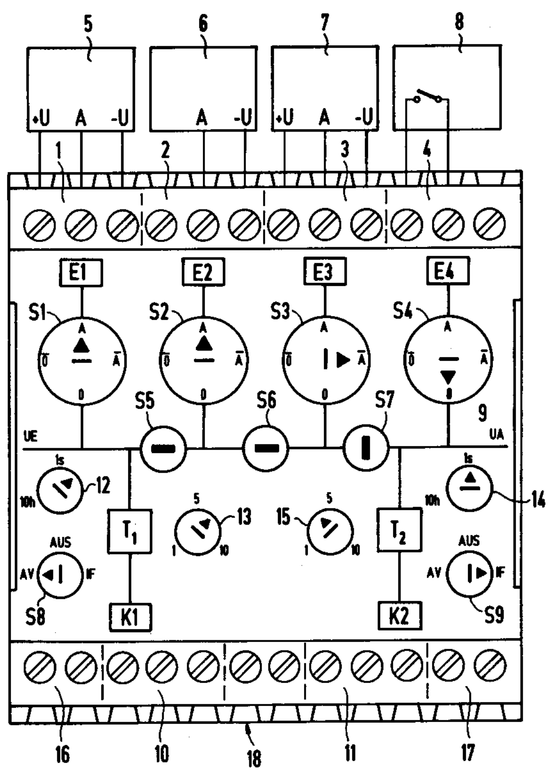


FIG 1

EP 0 542 060 A1

Die Erfindung bezieht sich auf ein Zeitrelais mit integrierter Signalverarbeitung zum Anschluß mehrerer Sensoren und Schaltmitteln zur Verknüpfung der Eingänge zur Erzielung bestimmter Ausgangssignale.

Bei einem bekannten Schaltrelais der obengenannten Art (OMRON S3D2-CK-US/CC-US) sind für zwei Eingänge Schalter vorgesehen, die das Signal invertieren können. Weiterhin ist ein Schalter vorgesehen, der die beiden Eingänge verunden oder verodern kann. Durch die Erfindung soll ein Zeitrelais der obengenannten Art geschaffen werden, bei dem die Verknüpfungsart von mehreren Eingängen auf einfache Weise erkennbar ist. Dies wird ohne erheblichen Aufwand dadurch erreicht, daß die Schaltmittel nach Art eines Mosaikschaltbildes mit erkennbarem Verknüpfungsverlauf als Verknüpfungsschiene angeordnet sind. Um mehrere Eingänge auf eine gemeinsame Verknüpfungsschiene schalten zu können, ist es von Vorteil, wenn an die Verknüpfungsschiene sowohl eingangsseitig als auch ausgangsseitig weitere Zeitrelais anschließbar sind und dies durch eine geräteübergreifende Darstellung der Verknüpfungsschienen dargestellt wird. Um auch für die Ausgänge Wahlmöglichkeiten zu haben, ist es von Vorteil, wenn Schaltmittel für die Wahl einer Ansprechverzögerung oder Impulsformung vorgesehen sind. Um für die Eingänge die Art der Verknüpfung einfach festlegen zu können, ist es von Vorteil, wenn Schaltmittel für die Wahl der Art der Verknüpfung der Eingänge über UND, ODER, INV-UND oder INV-ODER vorgesehen sind. Eine einfache Übersicht über die Anschlußmöglichkeiten ergibt sich, wenn die Anschlußklemmen für die Sensoren und die Ausgänge durch Klappen abdeckbar sind, auf denen die Anschlußbezeichnungen wiedergegeben sind. Eine einfache Art der Verknüpfung selbst ergibt sich, wenn die Verknüpfung über einen durch die Schaltmittel programmierbaren Steuerbaustein erfolgt.

Anhand der Zeichnung ist ein Ausführungsbeispiel gemäß der Erfindung beschrieben.

Es zeigen:

- FIG 1 das Zeitrelais mit integrierter Signalverarbeitung in Vorderansicht mit symbolisch angeschlossenen Sensoren,
- FIG 2 eine schematische Darstellung der Verknüpfung der Sensoreneingänge im Zeitrelais nach FIG 1 und
- FIG 3 ein Blockschaltbild der Logik des Zeitrelais mit integrierter Signalverarbeitung.

In dem Zeitrelais nach FIG 1 sind Eingänge 1 bis 4 für einen Näherungsschalter 5, eine speicherprogrammierbare Steuerung 6, eine Lichtschranke 7 und einen mechanischen Geber 8 vorgesehen. Die Eingänge 1 bis 4 beinhalten auch eine Spannungsversorgung für die angeschlossenen Sensoren 5 bis 8. Die Eingänge für diese Sensorsignale sind mit E1 bis E4 bezeichnet. Sie werden über Schalter S1, S2, S3, S4 geführt, mit denen eine Verknüpfungsart gewählt werden kann, und zwar eine UND-Verknüpfung/A, eine ODER-Verknüpfung/O bzw. eine INV-UND/$\overline{A}$- oder INV-ODER/$\overline{O}$-Verknüpfung. Hierzu wird der Schalter mit dem Pfeil auf das entsprechende Symbol gedreht. Die Ausgänge dieser Schalter werden dann auf eine Verknüpfungsschiene 9 geführt. Die Verknüpfung der von den Schaltern S1 bis S4 ausgehenden Signale erfolgt über weitere Schalter S5, S6, S7. Zwei Ausgänge 10 und 11 des Zeitrelais werden von der Verknüpfungsschiene über ein Zeitglied T1 bzw. T2 angesteuert. Mit K1 und K2 sind die Ausgangsrelais bezeichnet, so daß an den Ausgängen 10, 11 ein Wechslerkontakt abgenommen werden kann. Mit den Schaltern S8, S9 kann das Ausgangssignal an den Ausgängen 10, 11 entweder ansprechverzögert, unverzögert oder als Impuls ausgegeben werden, auch hier wieder entsprechend der Stellung des Schalters S8 bzw. S9. Für die Ansprechverzögerung und Impulsformung können über die Schalter 12, 13 bzw. 14, 15 entsprechende Zeiten eingestellt werden. An der unteren Klemmleiste sind weiterhin Ein- und Ausgangsklemmen 16, 17 vorhanden, die es ermöglichen, sowohl eingangsseitig als auch ausgangsseitig weitere Zeitrelais an die Verknüpfungsschiene anzuschließen. Dies ist in der Verknüpfungsschiene 9 mit UE bzw. UA bezeichnet. Durch die mosaikschaltbildmäßige Anordnung der Schalter ist schon rein optisch die Verknüpfungsart zu erkennen. Die FIG 2 zeigt die gemäß FIG 1 eingestellte Verknüpfung. Der Näherungsschalter 5 geht über den Eingang E1 und eine UND-Verknüpfung mit 6 sec. Ansprechverzögerung auf das Relais K1. Zu der UND Verknüpfung gehören - wie die Verknüpfungsschiene 9 zeigt - durch Stellung der Schalter S5, S6, ebenfalls das SPS-Ausgangssignal 6 und die Lichtschranke 7, deren Signal jedoch invertiert verknüpft wird. Durch die senkrechte Stellung des Schalters S7 erzeugt der mechanische Geber 8 über den Eingang E4 für das Relais K2 einen 400 ms Impuls. FIG 3 zeigt das Blockschaltbild der Logik. Die Spannungsversorgung 18 wird über die mittleren Klemmen gemäß FIG 1 zugeführt. Je nach Stellung der Schalter S1 bis S4 können durch Abgabe von Null- oder Eins-Signal entsprechende Auswahlsignale in die Verarbeitung eingegeben werden. Dies ist durch die linke obere Tabelle verdeutlicht. An den Eingängen A, B jeweils ein Null-Signal bedeutet eine UND-Verknüpfung. An dem Eingang A ein Eins-Signal, am Eingang B ein Null-Signal bedeutet eine INV-UND-Verknüpfung, am Eingang A ein Null – und am Eingang B ein Eins – Signal eine ODER – Verknüpfung, und an beiden Eingängen A und B ein Eins – Signal bedeutet eine INV – ODER – Verknüpfung. Dies bezieht sich auf die Eingänge E1 bis E4. Für die Schalter S5 bis S7 in der Verknüfungsschiene 9 gilt für ein Null – Signal ein offener und für das Eins – Signal ein geschlos – sener Schalter. Für den Anschluß weiterer Zeitre – lais ist der Eingang UE und der Ausgang UA zu – ständig. Ein Null – Signal bedeutet, daß kein Über – tragungssignal vorhanden ist bzw. gebildet wird. Ein Eins – Signal zeigt an, daß ein Übertragungs – signal vom vorgeschalteten Zeitrelais vorliegt bzw. zum nachgeschalteten Zeitrelais weitergegeben wird. Die Logik für die Ausgänge K1 und K2 ist in der rechten oberen Ecke der FIG 3 dargestellt. Hiernach bringt der Schalter S8 bzw. S9 nach der dargestellten Bit – Kombination eine Ansprechver – zögerung, eine Impulsformung oder einen Ausgang ohne jegliche Zeitfunktion.

Durch das erfindungsgemäße Zeitrelais ist eine klare Abgrenzung zur speicherprogrammierbaren Steuerung mit dem Programmiergerät gegeben. Es ist eine einfache, übersichtliche Bedienung mög – lich. Dadurch, daß die Anschlußklemmen für die Sensoren und die Ausgänge durch Kappen ab – deckbar sind, auf denen die Anschlußbezeichnun – gen wiedergegeben sind. Wie dies aus FIG 1 zu ersehen ist, ist der Anschlußverlauf auch nach Ab – deckung zu erkennen. Es ist ein modularer Aufbau mit einer leichten Erweiterbarkeit sowie eine logi – sche Verknüpfung der Eingangssignale bei maxi – maler Flexibilität erreichbar.

**Patentansprüche**

1. Zeitrelais mit integrierter Signalverarbeitung zum Anschluß mehrerer Sensoren und Schaltmitteln zur Verknüpfung der Eingänge zur Erzielung bestimmter Ausgangssignale, **dadurch gekennzeichnet,** daß die Schalt – mittel (S1 – S9) nach Art eines Mosaik – schaltbildes mit erkennbarem Verknüpfungs – verlauf (9) als Verknüpfungsschiene angeord – net sind.

2. Zeitrelais nach Anspruch 1, **dadurch ge– kennzeichnet,** daß an die Verknüpfungs – schiene (9) sowohl eingangsseitig (UE) als auch ausgangsseitig (UA) weitere Zeitrelais anschließbar sind und dies durch eine geräte – übergreifende Darstellung der Verknüpfungs – schienen dargestellt wird.

3. Zeitrelais nach Anspruch 1 oder 2, **dadurch gekennzeichnet,** daß Schaltmittel (S8, S9) für die Wahl einer Ansprechverzögerung oder Impulsformung vorgesehen sind.

4. Zeitrelais nach Anspruch 1, 2 oder 3, **dadurch gekennzeichnet,** daß Schaltmittel (S1 – S4) für die Wahl der Art der Verknüpfung der Eingänge über UND, ODER, INV – UND oder INV – ODER vorgesehen sind.

5. Zeitrelais nach einem der vorhergehenden Ansprüche, **dadurch gekennzeichnet,** daß die Anschlußklemmen (1 – 4) für die Senso – ren (5 – 8) und die Ausgänge (10, 11, 16 – 18) durch Kappen abdeckbar sind, auf denen die Anschlußbezeichnungen wiedergegeben sind.

6. Zeitrelais nach einem der vorhergehenden Ansprüche, **dadurch gekennzeichnet,** daß die Verknüpfung über einen durch die Schalt – mittel (S1 – S9) programmierbaren Steuer – baustein erfolgt.

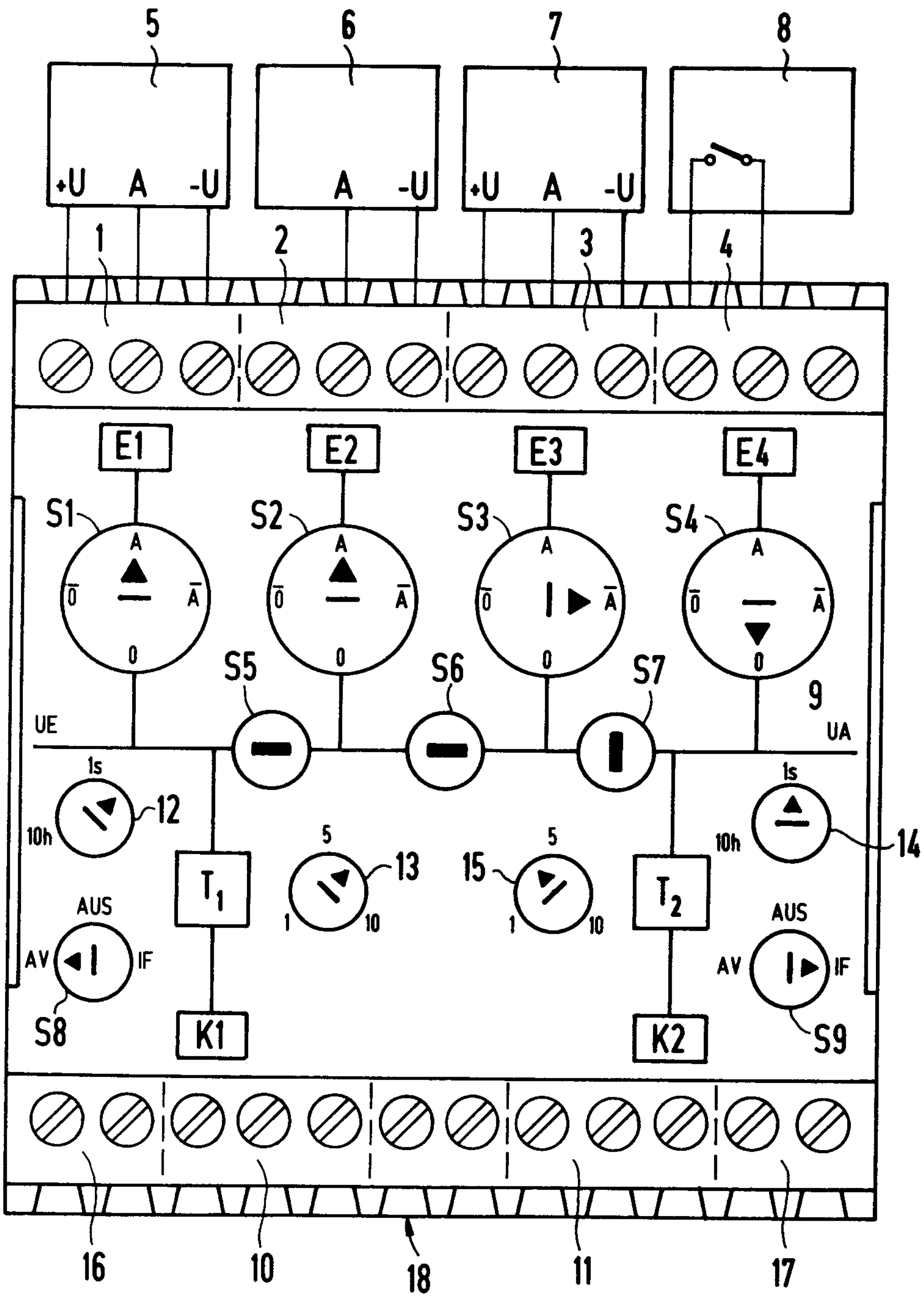
5
6
7
8
+U A -U
A -U
+U A -U
1
2
3
4
E1
E2
E3
E4
S1
S2
S3
S4
S5
S6
S7
9
UE
UA
1s
12
10h
T1
5
13
1
10
15
5
1
10
T2
1s
10h
14
AUS
AV
IF
S8
K1
K2
AUS
AV
IF
S9
16
10
18
11
17

FIG 1

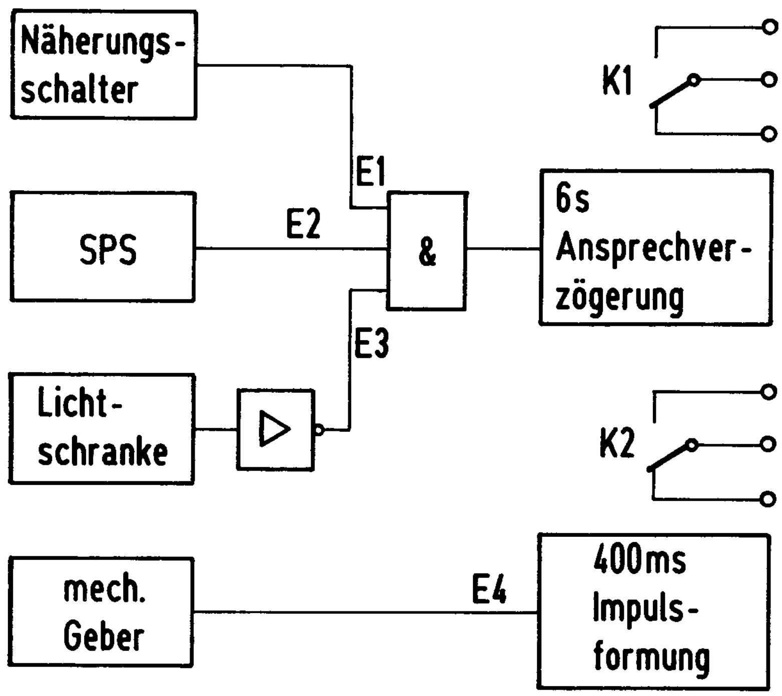
Näherungs-
schalter
SPS
Licht-
schranke
mech.
Geber
E1
E2
E3
E4
&
6s
Ansprechver-
zögerung
400ms
Impuls-
formung
K1
K2

FIG 2

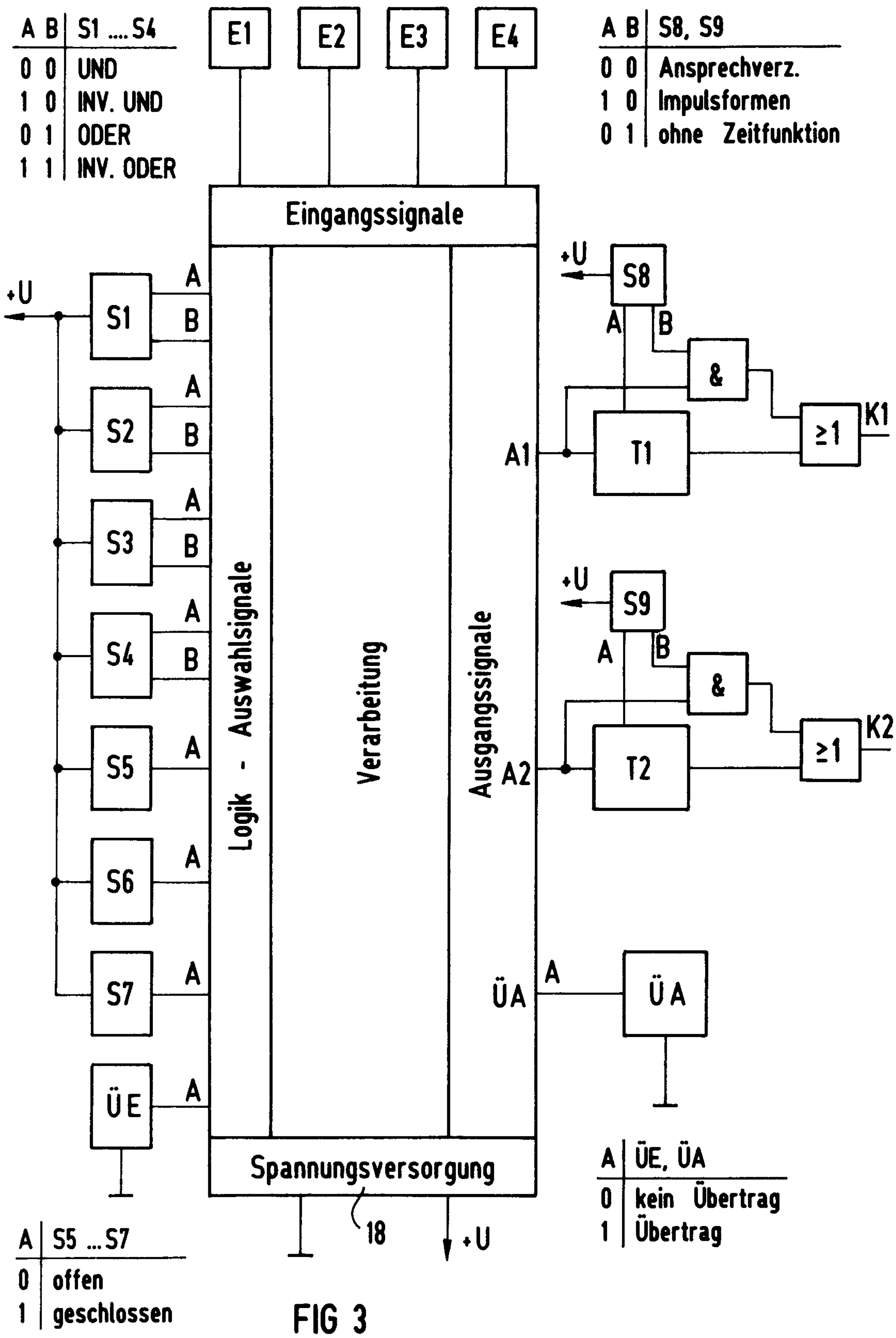
A B | S1 ....S4
0 0 | UND
1 0 | INV. UND
0 1 | ODER
1 1 | INV. ODER
E1
E2
E3
E4
A B | S8, S9
0 0 | Ansprechverz.
1 0 | Impulsformen
0 1 | ohne Zeitfunktion
Eingangssignale
+U
S1
S2
S3
S4
S5
S6
S7
ÜE
A
B
Logik - Auswahlsignale
Verarbeitung
Ausgangssignale
A1
A2
ÜA
S8
S9
&
≥1
K1
K2
T1
T2
ÜA
Spannungsversorgung
18
+U
A | S5 ...S7
0 | offen
1 | geschlossen
A | ÜE, ÜA
0 | kein Übertrag
1 | Übertrag

FIG 3

Europäisches Patentamt

# EUROPÄISCHER RECHERCHENBERICHT

Nummer der Anmeldung

EP 92 11 8622

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | CONTROL ENGINEERING<br>Bd. 24, Nr. 3, März 1977,<br>Seiten 53 - 54<br>E.J.KOMPASS 'Ladder Diagram Control Without PCs'<br>* das ganze Dokument * | 1-6 | H02B15/02<br>G05B19/08 |
| Y | FR-A-2 481 014 (JEAN RENE LOUIS LEROY)<br>* Seite 1, Zeile 18 - Zeile 21 *<br>* Abbildung 1 * | 1-6 | |
| A | DE-U-8 302 961 (SIEMENS)<br>* Seite 2, Zeile 31 - Seite 3, Zeile 3 *<br>* Abbildung 1 * | 1,2 | |
| A | DE-U-7 507 360 (P-E-K-ELECTRONIC)<br>* Abbildung 2 * | 1,2 | |
| A | US-A-4 301 449 (CHARLES A. FITZGERALD)<br>* Zusammenfassung *<br>* Abbildung 1 * | 1 | RECHERCHIERTE SACHGEBIETE (Int. Cl.5 ) |
| A | EP-A-0 123 595 (LA TELEMECANIQUE ELECTRIQUE)<br>* Seite 19, Zeile 6 - Zeile 10 *<br>* Abbildungen 14,15 * | 5 | H02B<br>G05B<br>H05K |

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1993 | LUND M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)